(19) **Europäisches Patentamt**

**European Patent Office**

**Office européen des brevets**

(11) **EP 1 538 820 A2**

(12) **EUROPEAN PATENT APPLICATION**

(43) Date of publication:
08.06.2005 Bulletin 2005/23

(51) Int Cl.$^7$: **H04N 1/00**

(21) Application number: **04028141.2**

(22) Date of filing: **26.11.2004**

| | |
|---|---|
| (84) Designated Contracting States:<br>**AT BE BG CH CY CZ DE DK EE ES FI FR GB GR**<br>**HU IE IS IT LI LU MC NL PL PT RO SE SI SK TR**<br>Designated Extension States:<br>**AL HR LT LV MK YU**<br><br>(30) Priority: **04.12.2003 JP 2003406207**<br><br>(71) Applicant: **SONY CORPORATION**<br>**Tokyo (JP)** | (72) Inventors:<br>• **Ueda, Michitada**<br>  **Shinagawa-ku Tokyo (JP)**<br>• **Sugizaki, Kyoko**<br>  **Shinagawa-ku Tokyo (JP)**<br><br>(74) Representative: **Müller - Hoffmann & Partner**<br>**Patentanwälte,**<br>**Innere Wiener Strasse 17**<br>**81667 München (DE)** |

(54) **Printing system and printing method**

(57) A printing system and a printing method are provided in which a user can select the optimal method to output photographed image data when the user outputs input image data using a printing system or the like.

When the photographed image data is input by the user to print the image data on which the user intends to perform printing processing, suitable printing sizes are computed with respect to the image data selected by the user among the input image data; a plurality of printing sizes including those suitable printing sizes are displayed on an operation screen; image data to be printed is generated based on the printing size selected from the plurality of printing sizes; and this image data to be printed is transmitted to a printing device which performs printing processing.

*FIG. 3*

**Description**

BACKGROUND OF THE INVENTION

Field of the Invention:

The present invention relates to a printing system and a printing method suitable for use in printing image data on which a user intends to perform printing processing.

Description of the Related Art:

In recent years, a digital camera has been widely used such as a digital camera function mounted in a mobile phone unit and the like. Digital image data photographed by those digital cameras can be stored in a removable recording medium such as a memory card, for example. The image data stored in the recording medium can be printed instantly on a pasteboard for photograph or the like using what is called a printing system installed in a photo studio (DPE store), a mass retailer of consumer electronics or the like.

With this printing system, digital image data can be variously processed (image processing can be performed) by making full use of digital image technology. As an example, there has been proposed such technology that an image to be print is processed into a template picture (for example, refer to Patent Reference 1).

[Patent Reference 1] Japanese Published Patent Application No. H10-164359

Conventionally, when printing an object image using the above described printing system, the user arbitrarily make a selection of a paper size, a dividing layout, image processing and the like. As a result, when a large output size is selected in comparison to input image data having less pixels, picture quality becomes deteriorated to result in a low-grade picture.

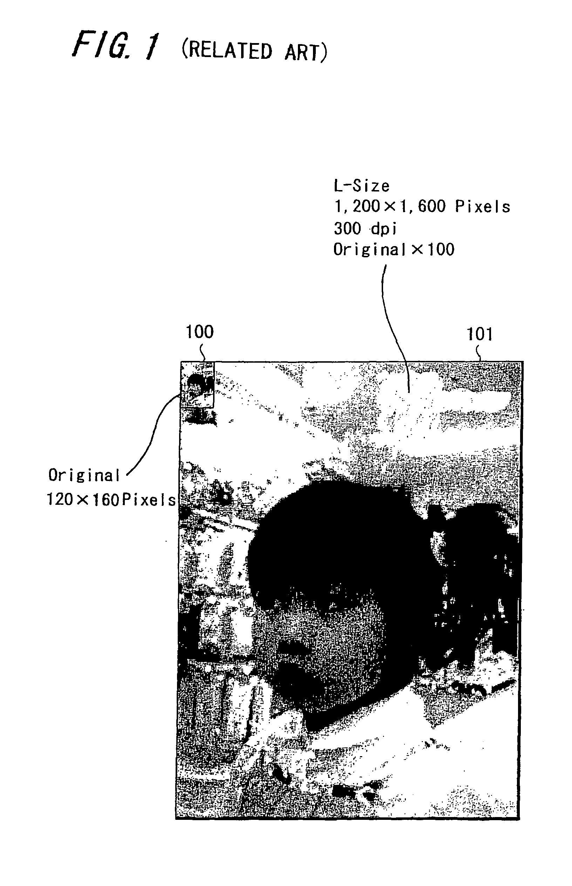

For example, as shown in FIG. 1, when a picture 100 having 120 _ 160 pixels photographed by a three hundred thousand-pixel class digital camera attached to a mobile phone unit is output to an L-size using a printer of 300dpi, the picture 100 is enlarged into a picture 101 that is one hundred times larger in terms of an area ratio.

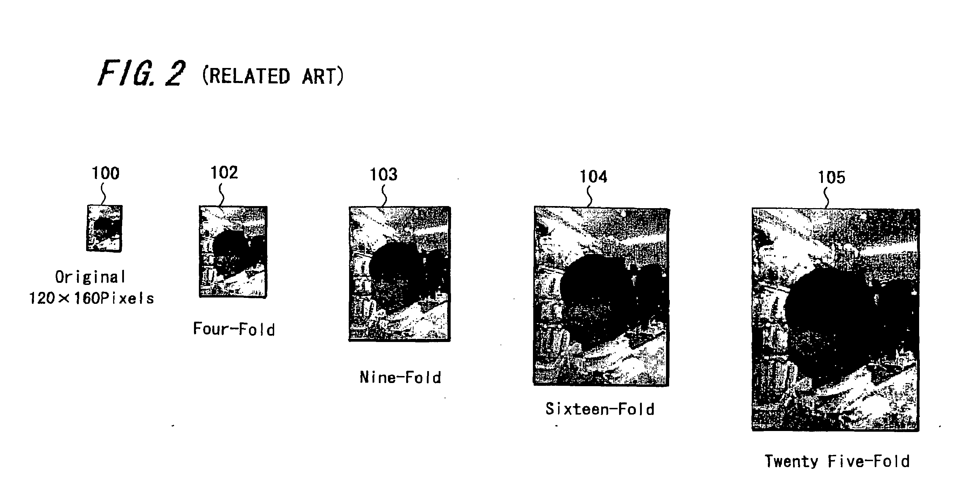

Further, FIG. 2 shows examples of the picture in which the original picture 100 is enlarged and printed. A picture 102 is four times as large as the original picture 100 in terms of the area ratio, a picture 103 is nine times as large as the same, a picture 104 is sixteen times as large as the same, and a picture 105 is twenty-five times as large as the same. When a picture is enlarged more than nine times in terms of the area ratio, it is conventionally said that degradation of the picture quality becomes conspicuous.

Thus, when digital image data is enlarged greatly from the original picture and is printed, there has occurred such problem that the degradation of the picture quality becomes conspicuous. Among users not understanding this factor, there may be one who tends to think that the performance of a printing system or a printer connected to the printing system or the performance of the digital camera is inferior when he/she looks at the picture having the conspicuous picture quality degradation, after performing enlargement and printing using the printing system.

Moreover, various functions of picture correction processing are added to the printing system to show the printed picture more beautifully; however there has been such a problem that when the user was not familiar with those functions or the user does not know how to use them, those functions cannot be used efficiently.

SUMMARY OF THE INVENTION

In view of the above, the present invention aims at enabling a user to select an optimal method for the output of photographed image data when the user outputs input image data using a printing system or the like.

In order to solve the above described problems and to attain the aim of the present invention, when printing input image data, in the present invention a suitable printing size is computed with respect to image data selected from the input image data; a plurality of printing sizes including this suitable printing size are displayed on an operation screen; image data to be printed is generated based on the printing size selected from the plurality of printing sizes; and the image data to be printed is transmitted to a printer which performs printing processing.

According to the present invention, the user not knowing the number of pixels of the input image such as resolution of a digital camera used for photographing can be instructed in the most suitable printing size through the operation on screen. Accordingly, referring to the instruction, the user can select the suitable printing size to obtain a high quality print.

Further, according to the present invention, warning can be displayed on the operation screen to indicate that the picture quality is not excellent if the above described image data is printed in other printing sizes than the suitable printing size.

According to the present invention, since the user can recognize the printing sizes in which the picture quality is not excellent if printed, by watching the warning displayed on the operation screen, the user can be instructed to select the more suitable printing size.

Furthermore, in the present invention the above described suitable printing size can be obtained such that a larger value (X) between the width and height of the selected image data, and the width of a printable paper size registered in advance are substituted for a formula (1 - (width of paper size/X)); an absolute value of the result is obtained; and the suitable printing size is determined by comparing this absolute value with a predetermined value set in advance.

According to the present invention, a parameter for determining the suitable printing size which is recommended to the user can be obtained using the above described simple calculation formula.

Moreover, according to the present invention an appropriate picture compensation method can be displayed in accordance with picture contents of the selected image data, in addition to the suitable printing size.

According to the present invention, the user, who does not understand the picture compensation processing such as a cosmetic filter and a red-eye correction or who does not know that there is such function, can be instructed in the most appropriate picture compensation method through operation on the screen, in addition to the suitable printing size. Accordingly, there is such effectiveness that the user can select the suitable picture compensation method in addition to the suitable printing size to obtain a further high-quality print by referring to the instruction.

BRIEF DESCRIPTION OF THE DRAWINGS

FIG. 1 is a view provided for explaining a conventional example;
FIG. 2 is a view provided for explaining a conventional example;
FIG. 3 is a system configuration diagram showing an embodiment according to the present invention;
FIG. 4 is an example of a printing method selection screen;
FIG. 5 is an example of an input medium selection screen;
FIG. 6 is an example of a cosmetic filter selection screen;
FIG. 7 is an example of a print size selection screen;
FIG. 8 is an example of deposit and print processing screen;
FIG. 9 is a flow chart of instruction contents processing; and
FIG. 10 is an example of paper size data.

DESCRIPTION OF THE PREFERRED EMBODIMENTS

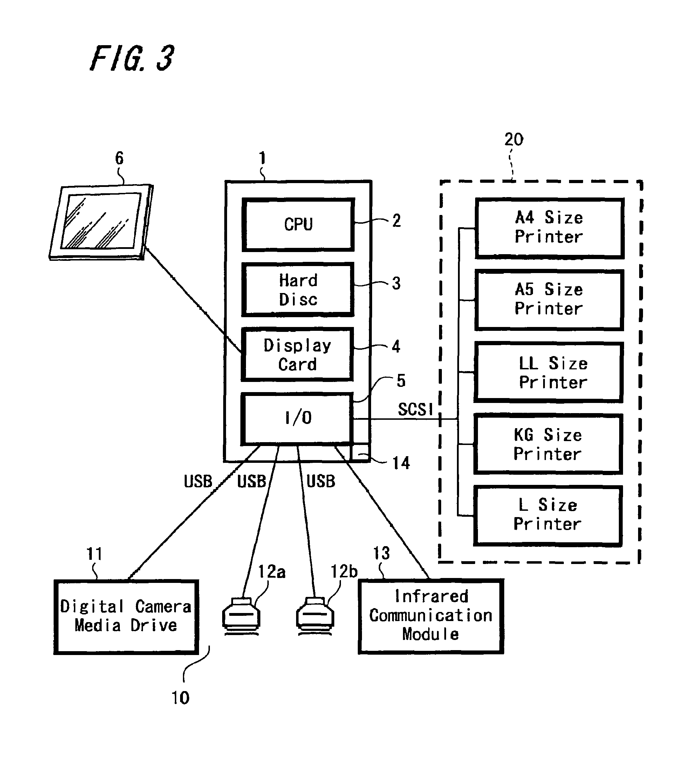

Referring to FIGS. 3 through 10, hereinafter an explanation is made to an embodiment according to the present invention.

FIG. 3 shows a system configuration of an embodiment according to the present invention. A reference numeral 1 denotes a control device (control means) including a personal computer (PC) and the like; a reference numeral 6 denotes a display device (display means) provided with a touch panel which displays an operation screen for a user to perform an input operation and displays photographed digital image data (also simply referred to image data); a reference numeral 10 denotes an input device (input means) to input the image data into the control device 1; and a reference numeral 20 denotes a printing device to perform printing of the image data to be printed which is transmitted from the control device 1.

The above described control device 1 includes, for example, a CPU (Central Processing Unit) 2 for various controls and operations, a hard disc 3 in which image data is stored and a predetermined application is recorded, a display card 4 which performs predetermined processing in order to display a picture on the display device 6 and an I/O unit 5 which performs input and output of data with respect to peripheral equipment such as the input device 10 and the printing device 20. The CPU 2 of this control device 1 performs predetermined processing using a RAM (Random Access Memory) not shown as a work area in accordance with a control program recorded in a ROM (Read Only Memory) (not shown) or application software which is recorded in the hard disc 3.

In this embodiment, as data input units of the input device 10, a digital camera media drive 11 corresponding to conventionally distributed various recording media of, for example, a CD-ROM, a memory card such as a memory stick- and the like, connection cables 12a and 12b for mobile phone units which correspond to individual communication companies and an infrared communication module 13 which conforms to the IrDA (Infrared Data Association) standard and the like are provided. With respect to image data photographed by a mobile phone unit incorporating a camera, data communication can be performed through the infrared communication module 13. In addition, in case of a mobile phone unit not provided with a wireless communication function which uses infrared rays, it is also possible to perform the data communication through wire by connecting a cable to the I/O unit 5. Moreover, with respect to data via the internet or the like, it is possible to perform the data communication through the Ethernet-.

Moreover, although the data communication between the I/O unit 5 and the digital camera media drive 11, and the data communication between the I/O unit 5 and each mobile phone unit are performed using USB (Universal Serial Bus); however not necessarily limited to the described example. Further in this embodiment, although each data input unit of the input device 10 is provided as peripheral equipment of the control device 1, each data input unit of the input device 10 may be provided integrally with the control device 1.

Further, printers employing various methods such as an ink jet method or a sublimation type thermal transfer method can be used as each printer of the printing device 20. Furthermore, the printing device 20 is made to receive data conforming to the SCSI (Small Computer System Interface) standard from the control device 1; however not necessarily limited to this example.

In the printing system shown in FIG. 3, image data photographed by the user using a digital camera or the like is input from any one of the input devices 10 and is stored in the hard disc 3 of the control device 1. For example, if the image data has been stored in a recording medium, the medium is loaded into the digital camera media drive 11 shown in FIG. 3, so that the image data is input into the control device 1. Further, if the image data has been stored in the mobile phone unit incorporating a camera, the mobile phone unit is connected to the connection cable 12a or 12b and the image data is input into the control device 1. As an alternative, the image data is input into the control device 1 through the infrared communication module 13. Further, the image data is input into the control device 1 through the Ethernet- 14, when input via a network.

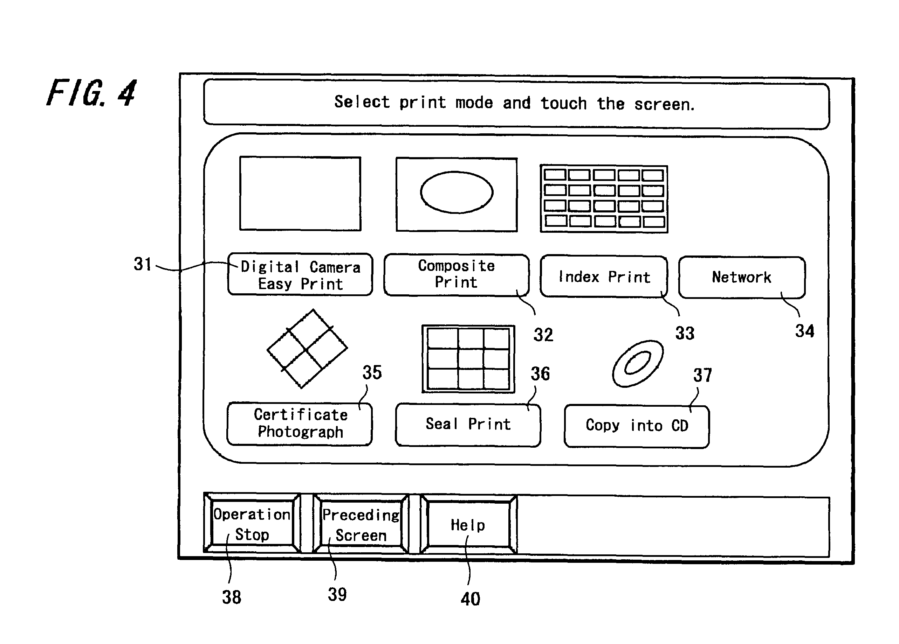

Next, referring to FIGS. 4 through 9, an explanation is made to a operational flow when the user performs printing of photographed image data using the printing system shown in FIG. 3.

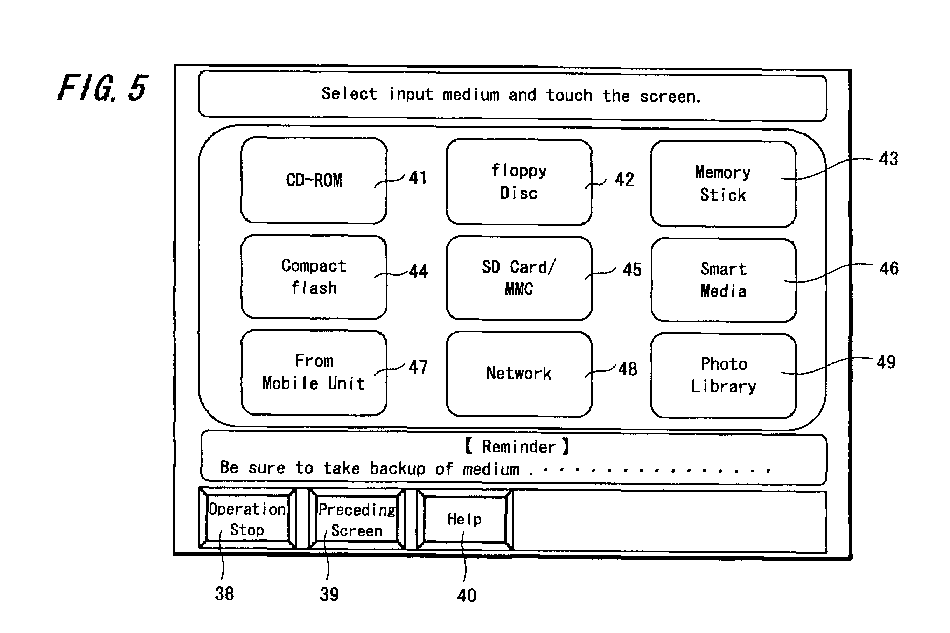

FIG. 4 shows an example of a menu screen displayed on the display device 6 of the printing system shown in FIG. 3. First, any one of printing method selection buttons on the screen is selected and touched according to the instruction of "select a print mode and touch the screen" which is displayed on the screen. In FIG. 4, on the screen are provided a digital camera easy print button 31, a composite print button 32 by which a picture composed and processed is printed, an index print button 33 by which pictures listed in one sheet are printed, a network button 34, a certificate photograph button 35 which performs printing of a certificate photograph from an input image, a seal print button 36 by which a seal is made and a CD copy button 37 by which the input image is recorded into a CD. On touching any one of the printing method selection buttons, a screen of FIG. 5 is displayed.

In addition, a reference numeral 38 denotes an operation stop button which suspends printing operation; a reference numeral 39 denotes a preceding screen button for returning to a preceding screen during operation and a reference numeral 40 denotes a help button used for making inquiry when there is a question during the operation.

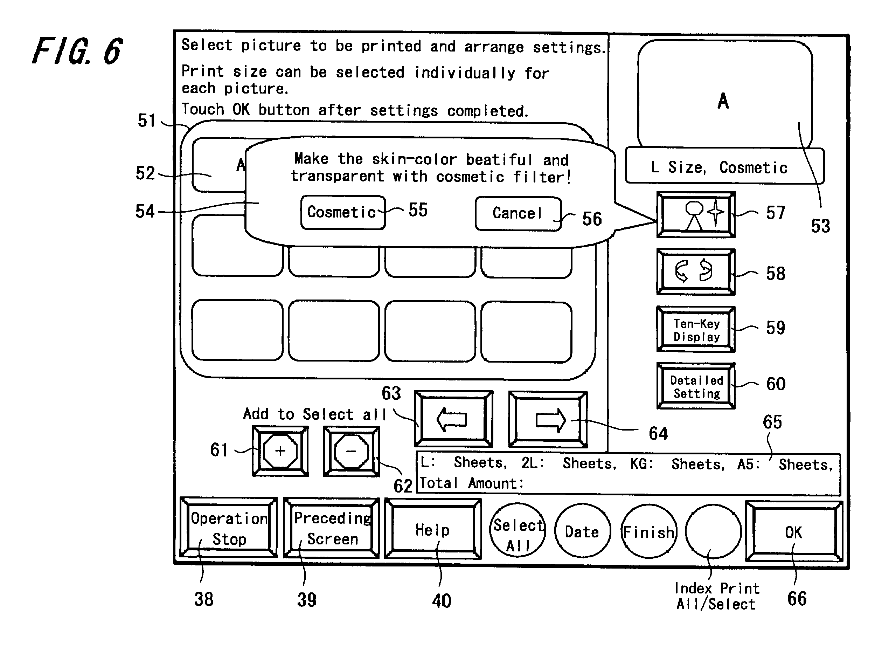

FIG. 5 shows an input medium selection screen. The user selects one of a plurality of input medium selection buttons shown in FIG. 5 to determine the input device 10 for inputting image data. Hereupon, on the screen are provided buttons for respective recording media of a CD-ROM 41, floppy- disc 42, memory stick- 43, compact flash- 44, SD card-/MMC- 45 and smart media- 46. Furthermore, there are provided a button 47 of "from a mobile unit", network button 48, photo library button 49 for reading out and printing the image data stored in the hard disc 3 of the control device 1, and the like. On touching any one of those input medium selection buttons shown in FIG. 5, such screen shown in FIG. 6 is displayed.

FIG. 6 shows a cosmetic filter selection screen which indicates the user to use a cosmetic filter. As an example of the cosmetic filter, such picture compensation processing can be considered that skin-colored regions are extracted by using, for example, image processing technology such as the one described in Japanese Patent Application No. 2003-025237 that is an application previously made by the applicants of the present invention, and when a ratio of the skin-colored portion occupied in the whole picture becomes a predetermined value or more, the skin color is made to look beautiful.

In this diagram, a reference numeral 51 denotes a thumbnail display region to display a thumbnail picture of the input image data, a reference numeral 52 denotes a thumbnail picture, a reference numeral 53 denotes an enlarged picture of the selected thumbnail picture, a reference numeral 54 denotes a cosmetic filter selection window, a reference numeral 55 denotes a cosmetic button, a reference numeral 56 denotes a cancel button and a reference numeral 57 denotes a cosmetic filter selection button. The user can select a desired picture such as the thumbnail picture 52 among the thumbnail pictures displayed in the thumbnail display region 51.

When a thumbnail picture is arbitrarily selected, the control device 1 extracts the skin-colored regions from the selected thumbnail picture. Then, when it is judged that the skin-colored regions occupy, for example, 20% or more of the whole picture, the user is advised to perform the cosmetic filter processing to improve the skin color and texture. At this time, since a pop-up display of a cosmetic filter selection window is shown on the screen, in which, for example, a message such as "make the skin beautiful and transparent using the cosmetic filter!" is written, the user selects and touches either the cosmetic button 55 when using the cosmetic filter or the cancel button 56 when not using the cosmetic filter.

Thus, when the control device 1 judges that using the cosmetic filter is recommended, the use of the cosmetic filter is advised through the operation screen to the user not understanding the cosmetic filter or not knowing that there is such function. Then, the user can obtain a beautiful print when referring to the advice and using the cosmetic filter.

Further, when the user tries to select the filter to improve the skin color and texture by touching the cosmetic filter selection button 57 for a picture on which the filter may have less effect to improve the above (skin-colored regions are less than 20%), warning to indicate that there is less effectiveness can be displayed.

In addition, when some thumbnail pictures are selected collectively to apply the cosmetic filter, a select button (+) 61 and a select button (-) 62 are used. Moreover, a move button (left) 63 and a move button (right) 62 are used to move to and select another thumbnail picture.

Furthermore, a rotation button 58 which performs rotation processing of a picture, a ten-key display button 59 to input characters such as a date and a detailed setting button 60 for editing setup of the image data in detail are provided in FIG. 6, and various settings may be performed on each of the selected thumbnail pictures.

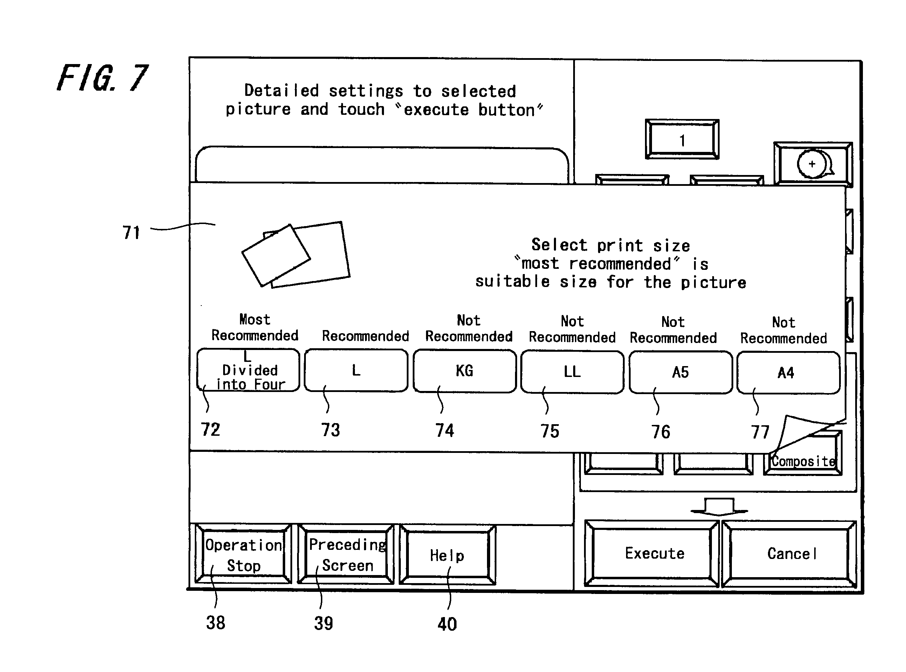

After the various settings are completed, the number of pixels of the selected picture is judged, and the paper size and dividing layout that are the closest among the connected printing devices 20 (FIG. 3) are advised. At this time, as shown in FIG. 7, a print size selection window 71 indicating "select a print size. 'The most recommended' is the size suitable for the picture" or the like is displayed.

As the display of the print size selection window 71 of FIG. 7, a selection button 72 (L divided into four) for the most recommended printing size to the user, a selection button 73 (L) for printing size recommended in the second place, furthermore selection buttons 74, 75, 76, and 77 (KG, LL, A5 and A4) for printing sizes which are not recommended are made to display together.

Thus, the control device 1 instructs the user not understanding the number of pixels of the input image such as the resolution of the digital camera used for photographing, in the optimal printing size through the operation screen. Accordingly, the user can select the suitable printing size by referring to the instruction and can obtain a print of a high-quality picture.

Further, since the warning against an inappropriate printing size whose picture quality is not excellent if the selected image data is printed is given to the user together with indication of the optimal printing size, the user becomes able to perform the selection of the suitable printing size more accurately.

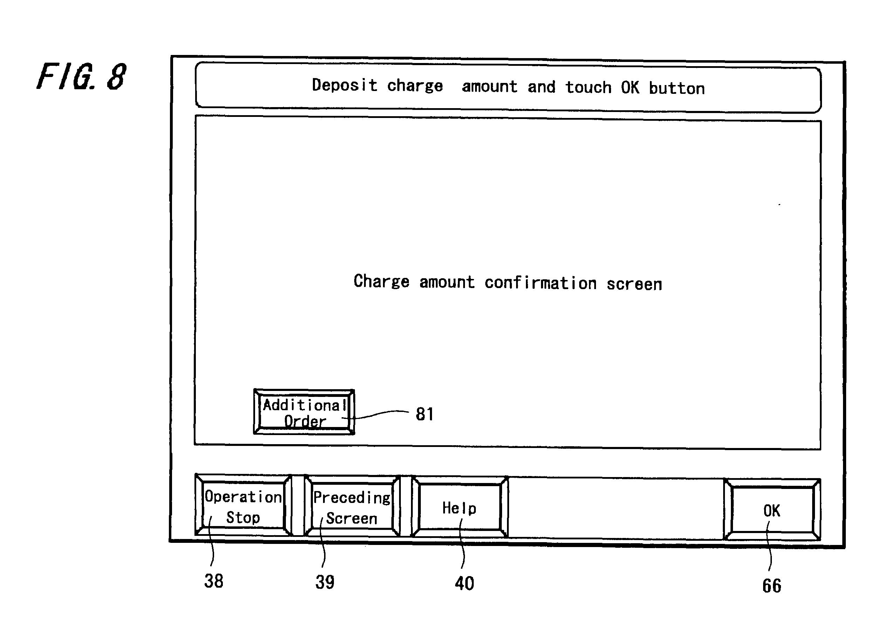

Thus, when completing various settings of the selected thumbnail picture and the setting of the print size, the operation returns to the screen of FIG. 6, and after checking the print size, the number of prints and the like on a display of a print contents and charge display portion 65, an OK button 66 is touched to make a screen of FIG. 8 displayed.

FIG. 8 shows a deposit amount and print processing screen to confirm a deposited amount and a progress of print processing. The user checks an amount to pay as looking at a charge confirmation screen, and after a required amount of money is deposited from a predetermined deposit slot, the OK button 66 is touched. The control device 1 generates the image data to be printed based on the printing size selected from the plurality of printing sizes and transmits the image data to be printed to the printing device 20. Then, the picture compensation processing with or without the cosmetic filter is performed on the image data selected by the user, and the printing in the desired printing size is performed by the number of sheets set by the user.

If the progress of the printing processing is displayed on the screen of FIG. 8 at this time, it is considered to be user-friendly. Moreover, when the user orders additional prints of the image data, additional printing processing can be performed by touching an additional order button 81. After the printing is completed, the operation returns to the display screen of the thumbnail pictures in FIG. 6.

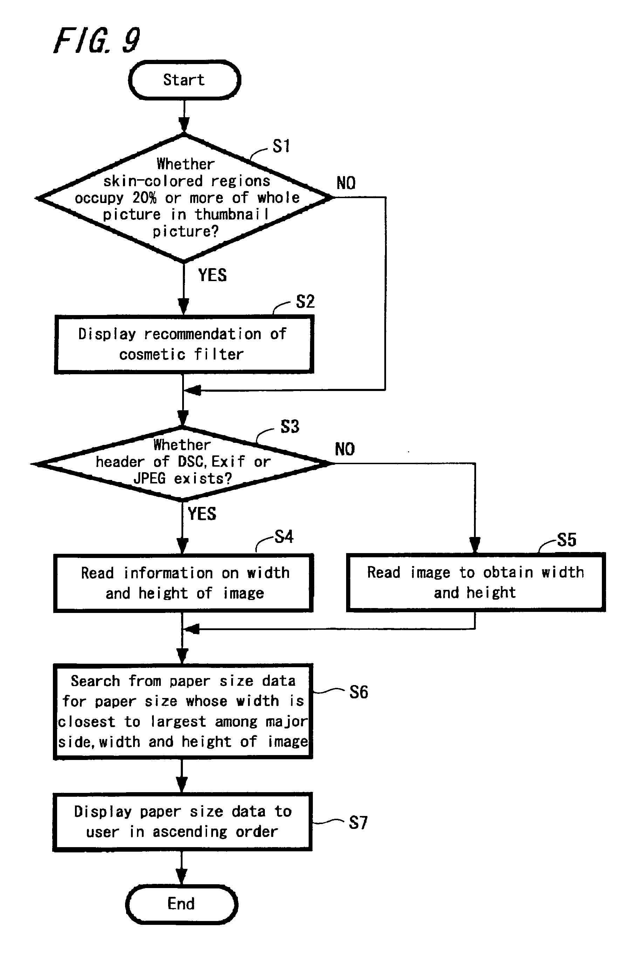

FIG. 9 is a flow chart showing the processing performed when the control device 1 displays the use of the cosmetic filter and the printing size on the screens of FIGS. 6 and 7, respectively.

First, after the image data is input in accordance with a guidance on the operation screen as shown in FIG. 5, it is judged whether or not the skin-colored regions occupy 20% or more of the whole picture in the thumbnail picture of FIG. 6 (step S1). Then, when the skin-colored regions occupy 20% or more, the display of recommending the cosmetic filter in FIG. 6 is shown (step S2). On the other hand, when the skin-colored regions occupy less than 20%, the operation moves to step S3.

Subsequently, while the user is operating the cosmetic filter, the control device 1 judges whether or not there exists a header such as, for example, DSC (Digital Still Camera), Exif (Exchangeable Image File Format) and JPEG (Joint Photographic Experts Group) in the data of the selected thumbnail picture (step S3). When the header is detected, information on the width and height of the image is read from the header information (step S4), and when the header is not detected, the image data is read to obtain directly the information on the width and height thereof (step S5).

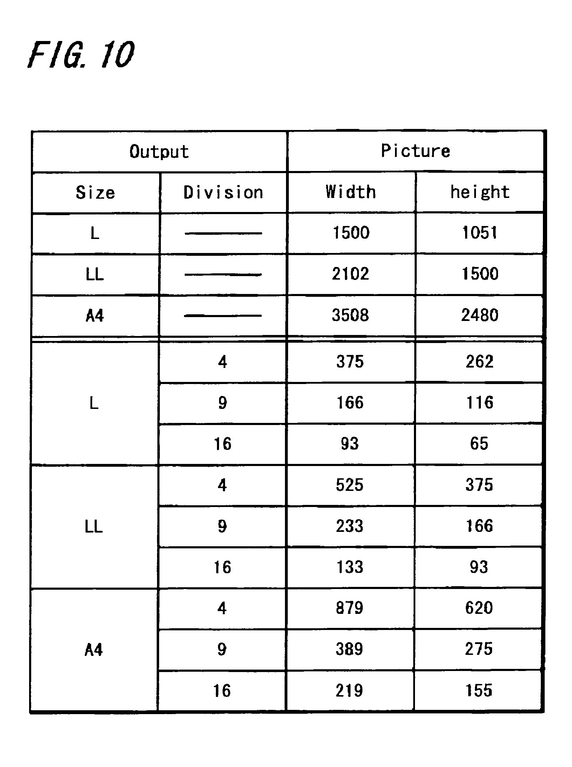

Further, by referring to paper size data shown in FIG. 10 which is described later on, the paper size whose width is the closest to the largest among the major side, width and height of the image data is computed to select the size as the optimal printing size (step S6). Specifically, a larger value (X) between the width and height of the selected image data, and the width of each printable paper size registered in advance are substituted for the following formula 1,

$$1 - (\text{width of paper size} / X) \qquad \text{Formula 1}$$

and the absolute value of the result is obtained. Then, the absolute value is compared with a value set in advance and those values are rearranged in ascending order. As the result of rearrangement, paper sizes and dividing layouts which are suitable for high-quality picture printing is displayed for the user sequentially from the higher rank (FIG. 7) (step S7).

Hereupon, when the absolute value of the formula 1, for example, is larger than three (exceeding nine times in terms of the area ratio) at the value of the highest rank, the warning to indicate that the print quality of the picture becomes deteriorated (display of not recommending the paper size) is shown (with buttons 74 through 77 in FIG. 7).

FIG. 10 shows an example of paper size data. The paper size data is the printing specification of the printing device 20, and is read from the printing device 20 in advance to be recorded in a nonvolatile memory such as the hard disc 3.

Thus, the value which is computed using the simple calculation formula of the formula 1 is used in this embodiment as a parameter for determining the suitable printing size which is recommended to the user.

In addition, though processing of improving the quality of the skin-colored portion according to the ratio of the skin-colored regions occupied in the whole picture has been described as the example of the compensation processing of the image data using the cosmetic filter, other compensation processing than the above such as, for example, cheek-trimming compensation processing, fine wrinkles and pigmented spots compensation processing and red-eye correction processing can be recommended by detecting the shape of a person's face. Further, various other compensation processing than using the cosmetic filter such as recommending the compensation processing of emphasizing green color when a picture is of scenery, for example, is also conceivable in order to provide the user with an excellent print.

Moreover, as an example of the input device 10, it is also possible to use a scanner other than the ones described in FIG. 3 to input the photographed image data into the control device 1.

Further, it is needless to say that the present invention can also be attained by providing a system or a device with a recording medium in which a program code of software for obtaining functions of the above described embodiment is recorded so that a computer (or, a control and operation means such as the CPU) of the system or device can read out and execute the program code stored in the recording medium. As the recording medium for providing the program code in this case, a variety of discs such as a removable magnetic recording disc, hard disc, optical disc, magneto-optical disc, CD-ROM, CD-R, a DVD, and other media such as a magnetic tape and nonvolatile memory card, for example, can be used.

Furthermore, it is obvious that the present invention is not limited to the example of the above described embodiment but other various structures can also be applied without departing from the scope and spirit of the present invention.

Having described preferred embodiments of the invention with reference to the accompanying drawings, it is to be understood that the invention is not limited to those precise embodiments and that various changes and modifications could be effected therein by one skilled in the art without departing from the spirit or scope of the invention as defined in the appended claims.

## Claims

1. A printing system to print image data, comprising:

   input means to input said image data;
   display means for displaying an operation screen; and
   control means for generating image data to be printed with respect to the input image data and for transmitting the image data to be printed to a printing device which performs printing processing, wherein
   said control means displays on said operation screen a plurality of printing sizes including a suitable printing size with respect to the image data selected from the input image data and generates based on a selected printing size the image data to be printed regarding said image data to be transmitted to said printing device.

2. The printing system according to claim 1, wherein warning is displayed on said operation screen to indicate that picture quality is not excellent if said image data is printed in other printing sizes than said suitable printing size.

3. The printing system according to claim 1 or 2, wherein said suitable printing size is determined such that a larger value (X) between the width and height of the selected image data, and the width of a printable paper size registered in advance are substituted for a formula (1 - (width of paper size / X)) to obtain an absolute value of the result, which is compared with a predetermined value set in advance.

4. The printing system according to any one of claims 1, 2 and 3, wherein said control means displays a suitable picture compensation method in accordance with contents of a picture of the selected image data in addition to displaying said suitable printing size.

5. The printing system according to any one of claims 1, 2, 3 and 4, wherein said image data is input into said input means from any one of a recording medium, a portable device, a scanner and a communication line.

6. A method of printing image data, comprising the steps of:

   computing a suitable printing size with respect to image data selected from said input image data;

displaying a plurality of printing sizes including the suitable printing size on an operation screen;

generating image data to be printed based on the printing size selected from said plurality of printing sizes; and

transmitting the image data to be printed to a printing device which performs printing processing.

7. The printing method according to claim 6, wherein
warning is displayed on said operation screen to indicate that picture quality is not excellent if said image data is printed in other printing sizes than said suitable printing size.

8. The printing method according to claim 6 or 7, wherein
said suitable printing size is determined such that a larger value (X) between the width and height of the selected image data, and the width of a printable paper size registered in advance are substituted for a formula (1 - (width of paper size / X)) to obtain an absolute value of the result, which is compared with a predetermined value set in advance.

9. The printing method according to any one of claims 6, 7 and 8, wherein
a suitable picture compensation method in accordance with contents of a picture of the selected image data is displayed in addition to said suitable printing size.

*FIG. 1* (RELATED ART)

L-Size
1,200×1,600 Pixels
300 dpi
Original×100

100                                                    101

Original
120×160Pixels

FIG. 2 (RELATED ART)

# FIG. 3

FIG. 4

Select print mode and touch the screen.

31 — Digital Camera Easy Print

Composite Print

Index Print

Network

32

33

34

35

36

37

Certificate Photograph

Seal Print

Copy into CD

Operation Stop

Preceding Screen

Help

38

39

40

EP 1 538 820 A2

**FIG. 5**

Select input medium and touch the screen.

| | | |
|---|---|---|
| CD-ROM 41 | floppy Disc 42 | Memory Stick 43 |
| Compact flash 44 | SD Card/ MMC 45 | Smart Media 46 |
| From Mobile Unit 47 | Network 48 | Photo Library 49 |

【 Reminder 】
Be sure to take backup of medium . · · · · · · · · · · · · · · · ·

| Operation Stop | Preceding Screen | Help | |
|---|---|---|---|

38      39      40

EP 1 538 820 A2

**FIG. 6**

Select picture to be printed and arrange settings.

Print size can be selected individually for each picture.

Touch OK button after settings completed.

51

52

54

A

Make the skin-color beatiful and transparent with cosmetic filter!

Cosmetic — 55    Cancel — 56

A

L Size, Cosmetic

57    53

58

Ten-Key Display — 59

Detailed Setting — 60

63

Add to Select all

61    +    —

62

64

65

L:    Sheets, 2L:    Sheets, KG:    Sheets, A5:    Sheets,

Total Amount:

Operation Stop

Preceding Screen

Help

Select All

Date

Finish

OK

38    39    40

Index Print All/Select

66

EP 1 538 820 A2

## FIG. 7

Detailed settings to selected
picture and touch "execute button"

1

71

Select print size
"most recommended" is
suitable size for the picture

| Most Recommended | Recommended | Not Recommended | Not Recommended | Not Recommended | Not Recommended |
|---|---|---|---|---|---|
| L Divided into Four | L | KG | LL | A5 | A4 |
| 72 | 73 | 74 | 75 | 76 | 77 |

Composite

| Operation Stop | Preceding Screen | Help | Execute | Cancel |
|---|---|---|---|---|
| 38 | 39 | 40 | | |

EP 1 538 820 A2

*FIG. 8*

Deposit charge  amount and touch OK button

Charge amount confirmation screen

Additional
Order ————— 81

| Operation Stop | Preceding Screen | Help | | OK |

38       39        40                              66

## *FIG. 9*

```
         ┌─────────┐
         │  Start  │
         └─────────┘
              │
              ▼
          ╱─────────╲                S1
        ╱   Whether   ╲
      ╱ skin-colored regions ╲          NO
     ◇ occupy 20% or more of whole ◇──────────┐
      ╲ picture in thumbnail ╱                 │
        ╲    picture?    ╱                     │
          ╲─────────╱                          │
              │ YES                            │
              ▼                  S2            │
       ┌──────────────────────┐               │
       │ Display recommendation of │           │
       │     cosmetic filter      │           │
       └──────────────────────┘               │
              │◄──────────────────────────────┘
              ▼
          ╱─────────╲                S3
        ╱   Whether   ╲                      NO
      ◇ header of DSC, Exif or ◇──────────────────────┐
        ╲  JPEG exists?  ╱                             │
          ╲─────────╱                                  │
              │ YES                                    │
              ▼              S4                        ▼              S5
       ┌──────────────────────┐          ┌──────────────────────┐
       │ Read information on width │       │ Read image to obtain width │
       │   and height of image    │       │     and height        │
       └──────────────────────┘          └──────────────────────┘
              │◄──────────────────────────────────────┘
              ▼
       ┌──────────────────────────┐
       │ Search from paper size data │
       │ for paper size whose width is │   S6
       │ closest to largest among major │
       │ side, width and height of image │
       └──────────────────────────┘
              │
              ▼
       ┌──────────────────────┐
       │ Display paper size data to │   S7
       │   user in ascending order │
       └──────────────────────┘
              │
              ▼
         ┌─────────┐
         │   End   │
         └─────────┘
```

16

*FIG. 10*

| Output | | Picture | |
| --- | --- | --- | --- |
| Size | Division | Width | height |
| L | ———— | 1500 | 1051 |
| LL | ———— | 2102 | 1500 |
| A4 | ———— | 3508 | 2480 |
| L | 4 | 375 | 262 |
| | 9 | 166 | 116 |
| | 16 | 93 | 65 |
| LL | 4 | 525 | 375 |
| | 9 | 233 | 166 |
| | 16 | 133 | 93 |
| A4 | 4 | 879 | 620 |
| | 9 | 389 | 275 |
| | 16 | 219 | 155 |